# EUROPÄISCHE PATENTSCHRIFT

(11) **EP 2 248 702 B1**
(45) Veröffentlichungstag und Bekanntmachung des Hinweises auf die Patenterteilung: **12.06.2013**
(21) Anmeldenummer: 10002021.3
(22) Anmeldetag: 26.02.2010
(51) Int. Cl.: B60P 3/08

(54) **Hubvorrichtung**
Lifting device
Dispositif de levage

(30) Priorität: 07.05.2009 DE 202009006630 U
(43) Veröffentlichungstag der Anmeldung: 10.11.2010
(73) Patentinhaber: Kässbohrer Transport Technik GmbH, 5301 Eugendorf (AT)
(72) Erfinder: Percht, Günther, 5071 Wals (AT)
(74) Vertreter: Grünecker, Kinkeldey, Stockmair & Schwanhäusser

(56) Entgegenhaltungen:
- EP-A2- 2 072 330
- US-A- 4 369 008
- US-A- 5 080 541
- US-A1- 2002 051 692

## Beschreibung

Die Erfindung betrifft einen Fahrzeugtransporter mit einer Hubvorrichtung zum Anheben und Absenken einer Hebebühne relativ zu einer unteren Ladeplattform.

Eine solche Hubvorrichtung für einen Fahrzeugtransporter ist beispielsweise aus der DE 296 15 981 U1 bekannt. Bei dieser Hubvorrichtung dient ein Spindelgetriebe zur Verstellung der oberen Hebebühne.

Eine weitere Hubvorrichtung für einen Fahrzeugtransporter ist aus der DE 68 91 0434 T2 bekannt, welche einen Spindeltrieb in eine Stütze zwischen Hebebühne und unterer Ladeplattform mit einer Schrägverbindung kombiniert, die als Zylinder ausgestaltet werden kann.

Die US 5,080,541 offenbart eine Hub-/Schwenkvorrichtung für eine Hebebühne eines Fahrzeugtransporters, welche eine Drehspindel und zwei auf dieser im Wesentlichen vertikal verstellbare Spindelmuttern sowie mit einer der Spindelmuttern gekoppelte Neigungsverstelleinrichtung aufweist. Durch die vertikale Verstellung der Spindelmuttern erfolgt ein Anheben bzw. Absenken der Hebebühne, wobei durch die Neigungsvestelleinrichtung zusätzlich die Neigung der Hebebühne einstellbar ist.

Aufgabe der vorliegenden Erfindung ist, einen Fahrzeugtransporter der eingangs genannten Art dahingehend zu verbessern, dass der Hubbereich der Hubvorrichtung ohne Vergrößerung der Bauhöhe der Hubvorrichtung erhöht wird und gleichzeitig eine weitestgehende Vermeidung einer Beschränkung der Durchfahrtsbreite auf insbesondere der Hebebühne und auch der Ladeplattform gegeben ist. Dies soll insbesondere bei einer Hebebühne in Ladestellung gelten, wenn entsprechende Fahrzeuge auf den Fahrzeugtransporter aufgefahren werden.

Diese Aufgabe wird durch die Merkmale des Anspruchs 1 gelöst.

Insbesondere zeichnet sich die Erfindung dadurch aus, dass die Hubvorrichtung seriell gekoppelte erste und zweite, vertikal parallel ausfahrbare Hubeinrichtungen aufweist, von denen wenigstens eine Hubeinrichtung eine Spindeltriebhubeinrichtung ist, wobei die erste Hubeinrichtung parallel neben der zweiten Hubeinrichtung oder innerhalb und parallel zur zweiten Hubeinrichtung angeordnet ist.

Durch diese serielle Anordnung und die Verwendung wenigstens einer Spindeltriebhubeinrichtung ergibt sich ein sehr großer Hubbereich mit der Möglichkeit, auch höhere Fahrzeuge mittels des Fahrzeugtransporters transportieren zu können. Dabei ist ebenfalls zu beachten, dass in einigen Ländern auch größere Gesamthöhen des Fahrzeugtransporters von bis zu 4,5 m erlaubt sind, so dass in diesen Ländern ebenfalls ein großer Hubbereich von Vorteil ist.

Weiterhin gilt für die erfindungsgemäße Hubvorrichtung der Fahrzeugtransporters, dass diese nur eine geringe Breite in Fahrzeugquerrichtung sowie auch in Fahrzeuglängsrichtung aufweist. Dadurch ist beispielsweise die Durchfahrtsbreite auf der entsprechenden Hebebühne bzw. Ladeplattform nur wenig oder gar nicht eingeschränkt. Die geringe Breite in Längsrichtung erleichtert das Aussteigen aus dem zu beladenden Fahrzeug.

Dies gilt insbesondere auch in einer Ladestellung der Hebebühne, in der sie schräg nach hinten und unten geneigt ist. Auch in dieser Ladestellung ragt die erfindungsgemäße Hubvorrichtung nicht oder nur geringfügig - für die Beladesituation nicht relevant - über die Hebebühne nach oben hinaus.

Dadurch werden eventuelle Beschädigungen am Fahrzeug und insbesondere beim Aussteigen aus dem Fahrzeug vermieden oder gar ausgeschlossen.

Vorteilhafterweise sind entsprechende Hubvorrichtungen paarweise auf gegenüberliegenden Seiten der Ladeplattform angeordnet. Dies kann auch an mehreren Stellen in Längsrichtung des Fahrzeugtransporters erfolgen.

Durch die serielle Kopplung der beiden Hubeinrichtungen erfolgt in der Regel zuerst ein Aus- oder Einfahren der ersten Hubeinrichtung, die die zweite Hubeinrichtung mitbewegt, und anschließend erfolgt das Ein- oder Ausfahren der zweiten Hubeinrichtung. Es ist ebenfalls denkbar, dass dieses Ein- und Ausfahren von erster und zweiter Hubeinrichtung zumindest teilweise simultan oder in umgekehrter Reihenfolge erfolgt, oder über Zwangsfolgesteuerung geregelt ist.

Bei einem vorteilhaften Ausführungsbeispiel ist es denkbar, dass die erste Hubeinrichtung eine Teleskophubeinrichtung mit Hydraulikzylinder ist. Diese bewegt dann entsprechend beim Ein- und Ausfahren die zweite Hubeinrichtung in im wesentlichen vertikaler Richtung, wobei diese zweite Hubeinrichtung eine entsprechende Spindeltriebhubeinrichtung ist.

In diesem Zusammenhang kann es weiterhin als vorteilhaft angesehen werden, dass die Teleskophubeinrichtung ein schnelles Anheben und Absenken ermöglicht, während durch die Spindeltriebhubeinrichtung beispielsweise anschließend ein genaues und langsameres Bewegen der Hebebühne erfolgt. Dies ermöglicht, dass einerseits schnell und andererseits genau ein Einstellen von Mindestabständen zwischen Fahrzeugen und Hebebühne im Ladezustand möglich ist.

In diesem Zusammenhang kann es ebenfalls als günstig angesehen werden, wenn die zweite Hubeinrichtung durch die erste Hubeinrichtung zwischen einer Ladestellung und einer Anhebestellung im wesentlichen vertikal anhebbar und absenkbar ist.

Eine einfache Ausführungsmöglichkeit für eine erste Hubeinrichtung insbesondere in Form einer Teleskophubeinrichtung kann darin gesehen werden, wenn diese eine Innenprofil- in-Außenprofil-Führung aufweist. Die entsprechenden Profile können unterschiedliche Formen aufweisen, wie rund, oval, oder auch eckig.

Um die zweite Hubeinrichtung unabhängig von der ersten Hubeinrichtung führen zu können und insgesamt die Stabilität der erfindungsgemäßen Hubvorrichtung zu erhöhen, kann die zweite Hubeinrichtung eine Führung seitlich neben der Führung der ersten Hubeinrichtung aufweisen. Auf diese Weise sind die beiden Hubeinrichtungen parallel zueinander angeordnet und gleichzeitig bewegungsmäßig seriell gekoppelt.

Es kann ausreichend sein, wenn nur die Führung der ersten Hubeinrichtung im wesentlichen seitlich an der Ladeplattform befestigt ist. Es besteht allerdings ebenfalls die Möglichkeit, dass beide Führungen von erster und zweiter Hubeinrichtung entsprechend befestigt sind, oder auch über eine gemeinsame Befestigungseinrichtung an der Ladeplattform befestigt sind.

Eine einfache Führung für die Hubeinrichtung wird darin gesehen daß die zweite Hubeinrichtung ein in einem Außengehäuse geführtes Innengehäuse aufweist, in welchem Innengehäuse die Spindeltriebhubeinrichtung angeordnet ist. Auf diese Weise wird die Spindeltriebhubeinrichtung mittels der ersten Hubeinrichtung und des Innengehäuses gegenüber dem Außengehäuse angehoben bzw. abgesenkt. In dem Innengehäuse können die entsprechenden Teile der Spindeltriebhubeinrichtung angeordnet sein.

Um mittels der ersten Hubeinrichtung die zweite Hubeinrichtung anheben und absenken zu können, kann es in diesem Zusammenhang als ausreichend angesehen werden, wenn das Innengehäuse im wesentlichen an einem oberen Ende der ersten Hubeinrichtung lösbar befestigt ist.

Entsprechende Teile der Spindeltriebhubeinrichtung sind beispielsweise eine Drehspindel und eine Spindelmutter, wobei diese verdrehgesichert ist. Um mittels der Spindelmutter, die sich bei Rotation der Drehspindel entlang dieser auf- und abbewegt, die Hebebühne bewegen zu können, kann der Spindelmutter ein mit der Hebebühne verbundener Tragblock zugeordnet sein.

Zur Drehung der Drehspindel wird in der Regel ein Antrieb in Form eines Spindeldrehmotors benötigt. Bei einem günstigen Ausführungsbeispiel kann dieser Spindeldrehmotor in der

Führung der Spindeltriebhubeinrichtung und insbesondere in deren Innengehäuse angeordnet sein. Dadurch wird der Spindeldrehmotor zusammen mit den übrigen Teilen der Spindeldrehhubeinrichtung ebenfalls durch die erste Hubeinrichtung auf- und abbewegt.

Neben einer entsprechenden Parallelanordnung der Führungen für erste und zweite Hubeinrichtungen ist auch eine zumindest teilweise Verschachtelung dieser Führungen denkbar, so dass beispielsweise auf einen Teil entsprechender Profile oder Gehäuse verzichtet werden kann. Dadurch wird die Hubvorrichtung noch kompakter und schlanker in ihrer Bauweise.

Eine solche Verschachtelung kann beispielsweise dadurch erfolgen, dass ein Innenprofil bzw. Innengehäuse der ersten Hubeinrichtung das Innenprofil bzw. Innengehäuse der zweiten Hubeinrichtung enthält und beide gemeinsam in nur einem Außenprofil bzw. Außengehäuse bewegbar sind.

Um trotz der schlanken und kompakten Bauweise der erfindungsgemäßen Hubvorrichtung eine einfache Verstellung des Tragblocks der Spindeltriebhubeinrichtung zu ermöglichen, kann der Tragblock seitlich aus einem Längsschlitz des Innengehäuses der zweiten Hubeinrichtung bzw. Spindeltriebhubeinrichtung vorstehen.

An dem entsprechenden vorstehenden Teil des Tragblocks ist dann die Hebebühne zum Anheben und Absenken befestigt.

Beim Anheben und Absenken der verschiedenen Hubeinrichtungen und insbesondere bei deren paarweiser Verwendung kann es sich weiterhin als vorteilhaft erweisen, wenn eine entsprechende Höhenausgleichseinrichtung zugeordnet ist. Bei einem Spindeltrieb kann eine solche Höhenausgleichseinrichtung insbesondere elektronisch ausgebildet sein. Bei einer Teleskophubeinrichtung kann diese in an sich bekannter Weise durch entsprechende Ventile und dergleichen realisiert werden.

In diesem Zusammenhang ist insbesondere zu beachten, dass die Spindeltriebhubeinrichtung zwar selbsthemmend ausgebildet ist, es allerdings bei entsprechenden Vibrationen bei Fahrten des Fahrzeugtransporters zu gewissen Absenkungen der Spindeltriebhubeinrichtung kommen kann, durch die sich die Hebebühne absenkt. Dies kann durch die elektronische Höhenausgleichsrichtung sowohl detektiert als auch signalisiert werden. Weiterhin ist zusätzlich zur Detektion und Signalisierung auch eine automatische Korrektur eines solchen Absenkens möglich. Die Höhenausgleichseinrichtung dient auch zur Synchronisierung von paarweise angeordneten Spindeltriebhubeinrichtungen. Dabei werden in der Regel die entsprechenden Spindeln dieser Spindeltriebhubeinrichtungen durch einen Hydraulikmotor als Spindeldrehmotor angetrieben. Für den synchronen Lauf der Spindeln sorgt eine mechanische Ausgleichswelle zwischen beiden Spindeln. Es ist ebenfalls denkbar, dass für jede der Spindeln der beiden Spindeltriebhubeinrichtungen ein Hydraulikmotor vorgesehen ist, deren Umdrehungen beispielsweise durch die Höhenausgleichseinrichtung überwacht und miteinander verglichen werden.

In der Regel ist es ausreichend, wenn nur eine Höhenausgleichseinrichtung allen Spindeltriebhubeinrichtungen eines Fahrzeugtransporters zugeordnet ist. Dieser vergleicht insbesondere die Bewegungen der Spindeltriebhubeinrichtung, die paarweise auf beiden Seiten des Fahrzeugtransporters und einander gegenüberliegend angeordnet sind.

In einem weiteren Ausführungsbeispiel kann auch die erste Hubeinrichtung als Spindeltriebhubeinrichtung ausgebildet sein, so dass in diesem Fall eine erste und eine zweite Spindeltriebhubeinrichtung seriell miteinander gekoppelt sind.

Bei einer solchen Verwendung von zwei seriell gekoppelten Spindeltriebhubeinrichtungen kann es insbesondere als vorteilhaft angesehen werden, wenn diese gleich aufgebaut sind, zumindest soweit es den Aufbau der Spindeltriebhubeinrichtung aus Drehspindel, Spindelmutter, Tragblock und Spindeldrehmotor betrifft. Die Führungen für jede Spindeltriebhubeinrichtung können unterschiedlich aufgebaut sein, wobei auch die Führung der Teleskophubeinrichtung für die zweite Spindeltriebhubeinrichtung verwendbar ist.

Eine einfache Anpassung der zweiten Spindeltriebhubeinrichtung kann erfolgen, indem beispielsweise deren Tragblock mit dem Innenprofil der Führung zur vertikalen Bewegung relativ zum Außenprofil verbunden ist.

Es ist allerdings ebenfalls möglich, dass entsprechende Innen- und Außengehäuse analog zur ersten Spindeltriebhubeinrichtung verwendet werden.

Auch bei zwei Spindeltriebhubeinrichtungen besteht die Möglichkeit, dass diese ineinander verschachtelt sind. Diese Verschachtelung kann einerseits die Profile bzw. Gehäuse betreffen, siehe die obigen Ausführungen. Es besteht aber auch die Möglichkeit, dass beispielsweise die Verschachtelung soweit erfolgt, dass die Drehspindel der ersten Spindeltriebhubeinrichtung in der Drehspindel der zweiten Spindeltriebhubeinrichtung angeordnet ist.

Es besteht weiterhin die Möglichkeit, dass die Drehspindeln von erster und zweiter Spindeltriebhubeinrichtung unterschiedliche Gewindesteigungen aufweisen. Dadurch besteht wiederum die Möglichkeit, mittels einer größeren Gewindesteigung schneller beispielsweise die erste Hubeinrichtung in vertikaler Richtung zu verstellen, während durch die Drehspindel mit geringerer Gewindesteigung ein langsameres und genaueres Verstellen der Hebebühne möglich ist.

In der Regel ist die Hubvorrichtung als feste und säulenartige Struktur ausgebildet, die bei einem Fahrzeugtransport beim Motorwagen oder Anhänger in Fahrtrichtung als vordere Hubvorrichtung vorgesehen ist. Eine solche Hubvorrichtung wird in der Regel nicht verschwenkt. Es ist allerdings ebenfalls denkbar, dass die erfindungsgemäße Hubvorrichtung nicht nur als eine solche vordere Hubvorrichtung, sondern ebenfalls als hintere Hubvorrichtung eingesetzt wird, wobei es in diesem Fall von Vorteil wäre, wenn die Hubvorrichtung zwischen einer Beladestellung und einer Einsatzstellung verschwenkbar gelagert ist.

Gemäß der Hubvorrichtung ist es möglich, dass diese im wesentlichen in einer Ebene einer Fahrbahnoberfläche der Hebebühne endet. Dadurch gibt es keinen Überstand über diese Fahrbahnoberfläche, welche gegebenenfalls ein seitliches Hindernis beim Auffahren entsprechender Fahrzeuge oder beim Verlassen der Fahrzeuge darstellt.

Im Folgenden werden vorteilhafte Ausführungsbeispiele der Erfindung anhand der in der Zeichnung beigefügten Figuren näher erläutert und beschrieben:

Es zeigen:
- Figuren 1a, 1b, 1c: Seitenansichten eines erfindungsgemäßen Fahrzeugtransporters beim Beladen und im beladenen Zustand, unter Verwendung eines Ausführungsbeispiels einer Hubvorrichtung;
- Figur 2: eine seitliche und perspektivische Darstellung eines ersten Ausführungsbeispiels einer Hubvorrichtung;
- Figur 3: eine Darstellung analog zu Figur 2 für ein zweites Ausführungsbeispiel der Hubvorrichtung;
- Figur 4: einen Schnitt entlang der Linie IV-IV aus Figur 3, und
- Figur 5: eine Darstellung analog zu Figur 2 für ein drittes Ausführungsbeispiel der Hubvorrichtung.

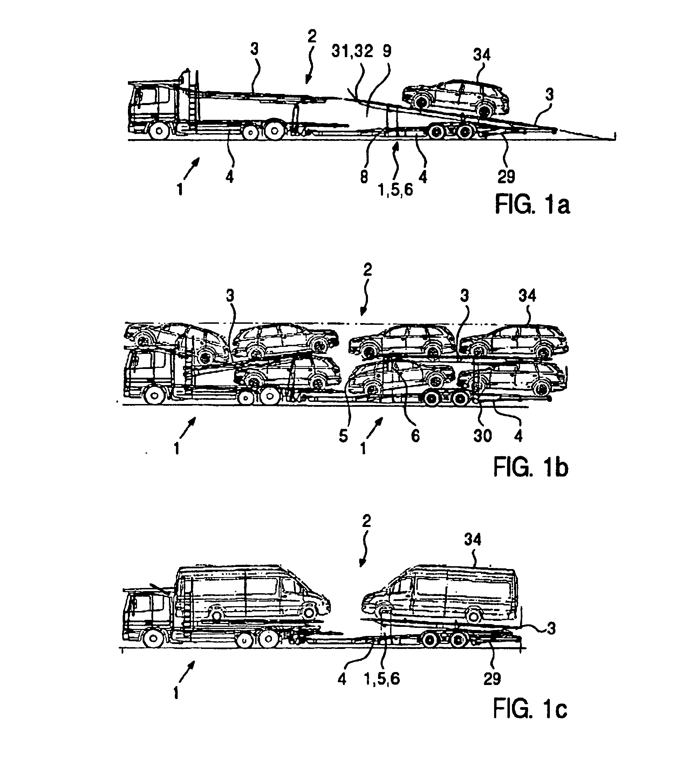

Figuren 1a, b und c zeigen Seitenansichten eines Fahrzeugtransporters 2 mit einer Hubvorrichtung 1. Diese ist als in Fahrtrichtung erste Hubvorrichtung am Anhänger des Fahrzeugtransporters angeordnet. Sowohl Motorwagen als auch Anhänger weisen jeweils eine Ladeplattform 4 und eine oberhalb von dieser und verschwenk- und absenkbar angeordnete Hebebühne 3 auf. Ein Fahrzeug 34 ist in der Seitendarstellung des Fahrzeugtransporters 2 nach Figur 1a auf die in Beladestellung angeordnete Hebebühne 3 aufgefahren. Die Hubvorrichtung 1 ist paarweise auf gegenüberliegenden Seiten 8 und 9 des entsprechenden Fahrzeugtransporters bzw. des Anhängers angeordnet. Die Hubvorrichtung 1 endet im wesentlichen in einer Ebene 31 einer Fahrbahnoberfläche 32 der Hebebühne 3.

Zwei Hubvorrichtungen sind beispielsweise dem Motorwagen bzw. einem hinteren Ende des Anhängers zugeordnet, wobei beim Anhänger die hintere Hubvorrichtung in einer Beladestellung 29 angeordnet ist. In dieser ist die hintere Hubvorrichtung nach hinten und unten verschwenkt, so dass die Hebebühne 3 mit ihrem in Fahrtrichtung hinteren Ende möglichst tief angeordnet ist.

In der Seitendarstellung des Fahrzeugtransporters nach Figur 1b ist dieser voll beladen und die entsprechenden Hebebühnen 3 sind in einer Fahrstellung angeordnet. Insbesondere die hintere Hubvorrichtung des Anhängers ist aus der Beladestellung 29 in eine im wesentlichen vertikale Einsatzstellung 30 nach oben verschwenkt angeordnet.

Die erfindungsgemäße Hubvorrichtung 1 ist zum Anheben der Hebebühne 3 ausgefahren und weist zwei seriell gekoppelte Hubeinrichtungen 5, 6 auf, die zwar parallel nebeneinander angeordnet, aber in vertikaler Verschieberichtung seriell gekoppelt sind.

In Figur 1c ist eine dritte Seitenansicht eines Fahrzeugstransporters 2 mit einer erfindungsgemäßen Hubvorrichtung 1 dargestellt. Auf dem Anhänger ist die Hebebühne 3 soweit wie möglich durch erfindungsgemäße Hubvorrichtung 1 abgesenkt dargestellt. Das entsprechende hintere Ende der Hebebühne 3 ist analog zu Figur 1a durch die weitere Hubvorrichtung in Beladestellung 29 nach unten abgesenkt. Aus der Darstellung nach Figur 1c ergibt sich insbesondere, dass nicht nur ein weites Ausfahren der erfindungsgemäßen Hubvorrichtung 1 möglich ist, siehe beispielsweise Figur 1b, sondern ebenfalls die Hebebühne 3 sehr weit nach unten in Richtung Ladeplattform 4 absenkbar ist. Dabei ist ein entsprechender Überstand der Hubvorrichtung 1 an deren oberem Ende über die Hebebühne 3 nur sehr gering, so dass ein Auffahren eines entsprechenden Fahrzeugs 34 oder ein Verlassen des Fahrzeugs 34 durch einen Fahrer in keiner Weise behindert ist.

Insgesamt ist aus den Figuren 1a bis 1c entnehmbar, dass die erfindungsgemäße Hubvorrichtung einen großen Hubbereich aufweist, der nicht nur eine große Hubhöhe, siehe Figur 1b, sondern auch eine größere Absenkung, siehe Figur 1c ermöglicht.

An dieser Stelle sei angemerkt, dass die erfindungsgemäße Hubvorrichtung 1 für alle entsprechenden Hubvorrichtungen am Motorwagen oder für eine Hubvorrichtung am Anhänger verwendbar ist. Dies betrifft ebenfalls die verschwenkbare Hubvorrichtung am in Fahrtrichtung hinten liegenden Ende des Anhängers, siehe die Hubvorrichtung in Beladestellung 29 und Einsatzstellung 30.

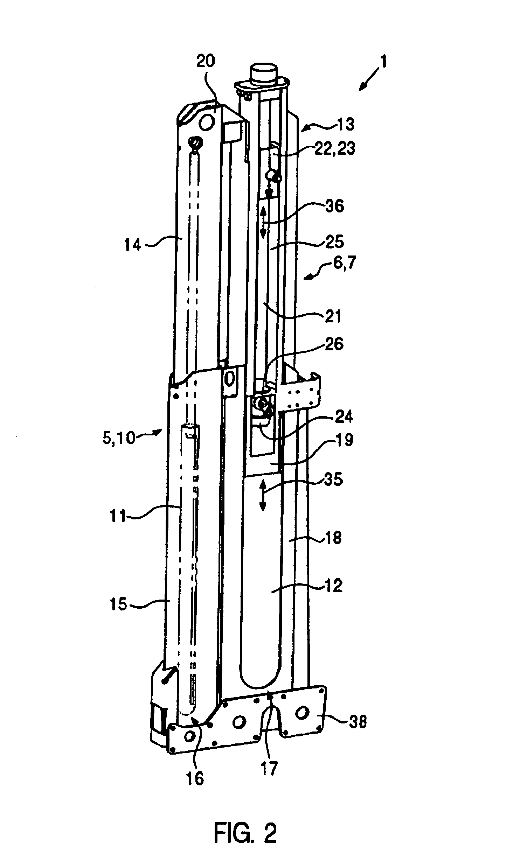

In Figur 2 ist eine seitliche perspektivische Darstellung eines ersten Ausführungsbeispiels einer erfindungsgemäßen Hubvorrichtung 1 dargestellt. Diese weist eine räumlich parallele Anordnung von erster Hubeinrichtung 5 und zweiter Hubeinrichtung 6 auf, die in vertikaler Verstellrichtung seriell miteinander gekoppelt sind. Die erste Hubeinrichtung 5 ist als Teleskophubeinrichtung10 mit Hydraulikzylinder 11 ausgebildet. Die erste Hubeinrichtung 5 weist eine Innenprofil 14 -in-Außenprofil 15 -Führung 16 auf. Das Innenprofil 14 ist aus dem Außenprofil 15 mittels des Hydraulikzylinders 11 ausschiebbar, siehe die ausgeschobene Stellung nach Figur 2. An einem oberen Ende 20 der ersten Hubeinrichtung 5 ist ein Innengehäuse 19 der zweiten Hubeinrichtung 6 lösbar befestigt. Die zweite Hubeinrichtung 6 ist als Spindeltriebhubeinrichtung 7 ausgebildet. Diese weist eine Drehspindel 21 und eine Spindelmutter 22 auf. Am unteren Ende der Drehspindel 21 ist ein Spindeldrehmotor 24 angeordnet. Dieser ist in der Regel ein Hydraulikmotor, der mit der fahrzeugeigenen Hydraulik verbunden ist.

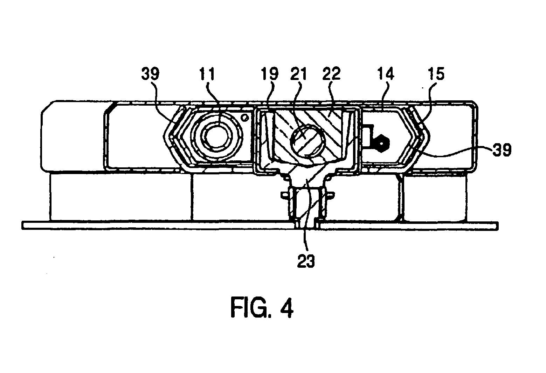

Der Spindelmutter 22, siehe auch Figur 4, ist ein Tragblock 23 zugeordnet. Dieser weist zumindest einen seitlich aus einem Längsschlitz 25 des Innengehäuses 19 vorstehenden Zapfen auf. An diesem ist die Hebebühne 3 befestigt und bei Bewegung des Tragblocks 23 in vertikaler Verstellrichtung 36 wird entsprechend die Hebebühne 3 angehoben oder abgesenkt, siehe auch Figur 1.

In der Darstellung nach Figur 2 ist der Tragblock 23 nahe zum oberen Ende 20 der ersten Hubeinrichtung 5 angeordnet. Von dort ist er durch Spindeldrehmotor 24 in Figur 2 nach unten bewegbar. Die Anordnung des Innengehäuses 19 nach Figur 2 entspricht einer Anhebestellung 13 durch die erste Hubeinrichtung 5, wobei sowohl Innenprofil 14 als auch Innengehäuse 19 in Figur 2 nach unten bis in eine Ladestellung 12 absenkbar sind, siehe die obere Darstellung in Figur 1. In der Ladestellung 12 sind Innenprofil 14 und Innengehäuse 19 im wesentlichen vollständig im Außenprofil 15 bzw. Außengehäuse 18 angeordnet. Das Außengehäuse 18 ist seitlich neben dem Außenprofil 15 als weiterer Teil der zweiten Hubeinrichtung 6 angeordnet.

Am unteren Ende sowohl von Außenprofil 15 als auch Außengehäuse 18 ist ein Befestigungsflansch 38 angeordnet. Dieser dient zur seitlichen Befestigung der Hubvorrichtung 1 am Fahrzeugtransporter insbesondere im Bereich der Ladeplattform 4.

Die Verstellung zwischen Ladestellung 12 und Anhebestellung 13 erfolgt in Anheberichtung 35.

Insgesamt bilden Außengehäuse 18 und Innengehäuse 19 eine Führung 17 der zweiten Hubeinrichtung 6.

Dem Spindeldrehmotor 24 kann bei einem Ausführungsbeispiel eine Höhenausgleichseinrichtung 26 zugeordnet sein. Diese dient zur Detektion und Signalisierung insbesondere eines ungewollten Absinkens der Spindelmutter beispielsweise aufgrund von Vibrationen beim Fahren des Fahrzeugtransporters. Ein solches Absenken tritt auf, selbst wenn ein entsprechender Spindeltrieb der erfindungsgemäßen Hubvorrichtung 1 selbsthemmend ausgebildet ist. Die Höhenausgleichseinrichtung 26 kann für alle Spindeltriebhubeinrichtungen 7 des entsprechenden Fahrzeugtransporters 2 vorgesehen sein. Außerdem kann sie automatisch einen entsprechenden Höhenausgleich zur Wiederherstellung gleicher Stellungen der Spindeltriebhubeinrichtungen durchführen. Dies gilt auch wenn jeder Spindeltriebhubeinrichtung 7 ein eigener Hydraulikmotor zugeordnet ist. Die Höhenausgleichseinrichtung 26 kann in diesem Zusammenhang auch für einen Gleichlauf dieser Hydraulikmotoren sorgen.

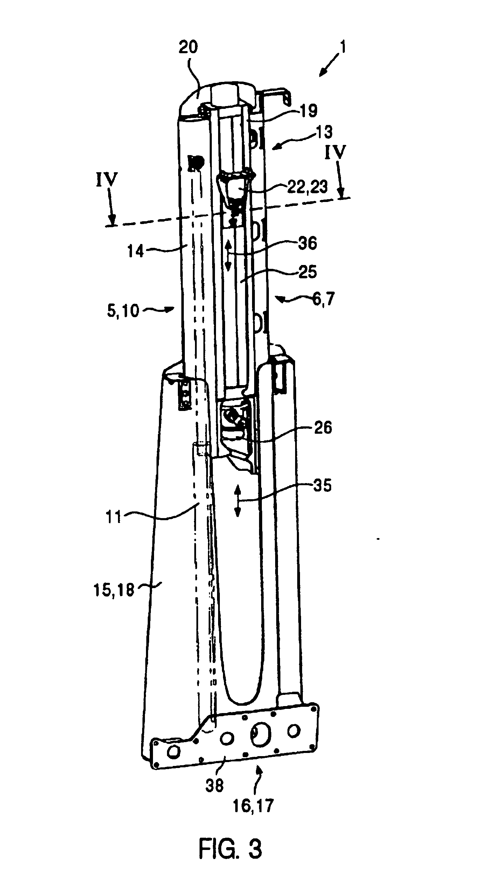

In Figur 3 ist ein zweites Ausführungsbeispiel der erfindungsgemäßen Hubvorrichtung 1 dargestellt. Gleiche Teile sind jeweils durch gleiche Bezugszeichen versehen, siehe auch die übrigen Figuren, wobei zum Teil auf eine Wiederholung der Beschreibung verzichtet wird.

Bei dem Ausführungsbeispiel nach Figur 3 sind erste und zweite Hubeinrichtung 5, 6 verschachtelt angeordnet. Dieser verschachtelte Anordnung betrifft insbesondere die Ineinanderverschachtelung der Führungen 16 und 17. Das Innenprofil 14 nach Figur 3 ist entsprechend im Außenprofil 15 der Führung 16 der ersten Hubeinrichtung 5 vertikal beweglich gelagert. Gleichzeitig bildet oder zumindest umfasst das Innenprofil 14 das Innengehäuse 19 der zweiten Hubeinrichtung 6. Das Innenprofil 15 bildet ein entsprechendes Außengehäuse 18, so dass bei Bewegung der zweiten Hubeinrichtung 6 mittels der ersten Hubeinrichtung 5 in Anheberichtung 35 die zweite Hubeinrichtung 6 direkt im Außenprofil 15 angehoben und abgesenkt wird.

Der Aufbau der zweiten Hubeinrichtung 6 ist analog zu Figur 2, siehe insbesondere Spindeltriebhubeinrichtung 7 mit Drehspindel 21, Spindelmutter 22, Tragblock 23 und Spindeldrehmotor 24.

Das Ausführungsbeispiel nach Figur 3 weist bei im wesentlichen gleicher Breite der Hubvorrichtung 1 in Fahrzeugquerrichtung eine geringere Länge in Fahrzeuglängsrichtung im Vergleich zur Hubvorrichtung nach Figur 2 auf. Die Funktionsweise der beiden Hubvorrichtungen nach Figuren 2 und 3 ist gleich. Das heißt, dass zuerst die erste Hubeinrichtung 5 betätigt wird, um mittels des Hydraulikzylinders 11 die zweite Hubeinrichtung 6 in die Anhebestellung 13 nach Figur 3 zu bewegen. Anschließend erfolgt eine Drehung der Drehspindel 21 um die Spindelmutter 22 mit Tragblock 23 in Verstellrichtung 36 nach oben oder unten zu bewegen.

Es besteht ebenfalls die Möglichkeit, dass die Bewegungen erster und zweiter Hubeinrichtungen 5, 6 zumindest teilweise gleichzeitig erfolgt.

In Figur 4 ist ein Schnitt entlang der Linie IV-IV aus Figur 3 dargestellt. Insbesondere die Verschachtelung der Führungen für erste und zweite Hubeinrichtungen 5, 6 ist erkennbar. Die Spindelmutter 22 ist verdrehgesichert an der Drehspindel 21 angeordnet und mit Tragblock 23 verbunden. Dieser steht seitlich aus dem Längsschlitz 25, siehe auch Figuren 2 und 3, hervor und ist mit der Hebebühne 3 verbunden.

Das Innenprofil 14 ist im wesentlichen durch zwei hausförmige Profilhälften gebildet, die an beiden Seiten des C-förmigen Innengehäuses 19 angeordnet sind. Eine entsprechende Befestigung zwischen Innenprofil 14 und Innengehäuse 19 kann analog zum Ausführungsbeispiel nach Figur 2 an dem oberen Ende 20 der ersten Hubeinrichtung 5 erfolgen. Ebenfalls ist denkbar, dass das Innenprofil 14 im wesentlichen über seine gesamte Länge außen am Innengehäuse 19 befestigt ist. Das Innenprofil 14 ist relativ zum Außenprofil 15 verschiebbar, wobei beide dieser Profile im wesentlichen ähnliche Querschnitte aufweisen, Zwischen beiden Profilen können Gleiteinsätze 39 zur Vermeidung eines direkten Kontakts der Profile angeordnet sein.

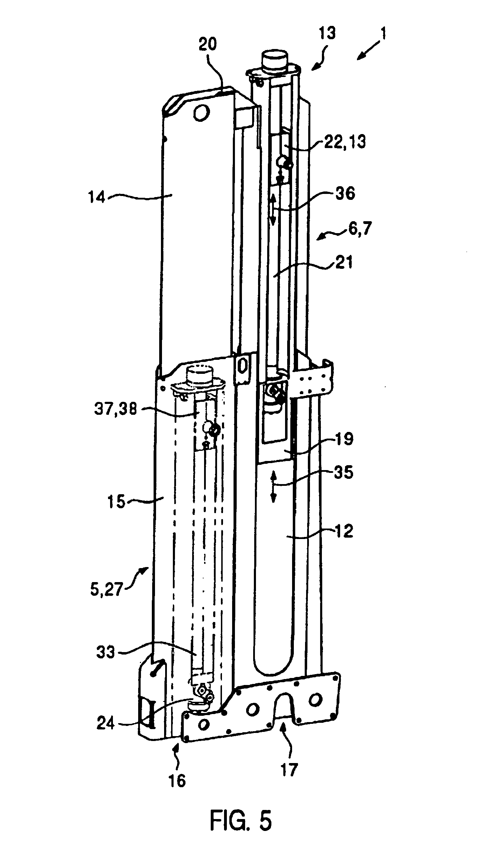

Figur 5 zeigt analog zu den Figuren 2 und 3 eine seitliche perspektivische Darstellung eines dritten Ausführungsbeispiels der erfindungsgemäßen Hubvorrichtung 1. Dieses unterscheidet sich im wesentlichen von dem Ausführungsbeispiel nach Figur 2 durch eine doppelte Anordnung einer Spindeltriebhubeinrichtung 7 bzw. 27 sowohl für die erste als auch zweite Hubeinrichtung 5, 6. Die zweite Hubeinrichtung 6 ist nach Figur 5 analog zur zweiten Hubeinrichtung nach Figur 2 aufgebaut. Der Hydraulikzylinder 11 nach Figur 2 ist durch eine zweite Spindeltriebhubeinrichtung 27 ersetzt. Diese ist im Aufbau gleich zur ersten Spindeltriebhubeinrichtung 7 und weist eine Drehspindel 33, eine Spindelmutter 37, einen Spindeldrehmotor 24 sowie einen Tragblock 28 auf. Allerdings ist in diesem Fall der Tragblock 28 mit dem Innenprofil 14 zu dessen Verstellung vertikaler Richtung verbunden. In Figur 5 ist das Innenprofil 14 soweit wie möglich aus dem Außenprofil 15 ausgefahren, wodurch die zweite Hubeinrichtung 6 und insbesondere deren Innengehäuse 19 mit in diesem angeordneter Spindeltriebhubeinrichtung 7 sichtbar sind. Ansonsten sind Funktionsweise und Aufbau wie bei den vorangehenden Ausführungsbeispielen.

Die entsprechende Höhenausgleichseinrichtung 26 kann in diesem Zusammenhang beiden Spindeltriebhubeinrichtungen 7 und 27 einer Hubeinrichtung auf einer Seite des Fahrzeugs als auch paarweise angeordneten Hubvorrichtungen 1 auf beiden Seiten des Fahrzeugtransporters zugeordnet sein.

Insgesamt ergibt sich gemäß Erfindung eine Hubvorrichtung mit einem sehr großen Hubbereich, siehe Figuren 1b und 1c, und der Möglichkeit auch höhere Fahrzeuge zu transportieren. Der entsprechend größere Hubbereich ist insbesondere in Ländern von Vorteil, die größere Gesamthöhen eines Fahrzeugtransporters von bis zu 4,5 m erlauben. Gleichzeitig ergibt sich durch die erfindungsgemäße Hubvorrichtung eine kompakte und schlanke Bauweise und die Hubvorrichtung ragt nicht über die Hebebühne hinaus oder schränkt die Durchfahrtsbreite der Hebebühne ein. Dies gilt sowohl in einer angehobenen Stellung der Hebebühne, siehe Figur 1b, als auch in einer Beladestellung der Hebebühne, siehe Figur 1a oder auch die Transportstellung nach Figur 1c.

## Patentansprüche

1. Fahrzeugtransporter (2) mit einer eine Hebebühne (3) relativ zu einer unteren Ladeplattform (4) zwischen einer Ladestellung und einer Fahrstellung anhebenden und absenkenden Hubvorrichtung (1), **dadurch gekennzeichnet, dass** die Hubvorrichtung (1) seriell gekoppelte erste und zweite vertikal parallel ausfahrbare Hubeinrichtung (5, 6) aufweist, von denen wenigstens die zweite Hubeinrichtung (6) eine Spindeltriebhubeinrichtung (7) ist, wobei die zweite Hubeinrichtung (6,7) ein in einem Außengehäuse (18) geführtes Innengehäuse (19) aufweist, in welchen Innengehäuse die Spindeltriebhubeinrichtung (7) angeordnet ist.

2. Fahrzeugtransporter nach Anspruch 1,
**dadurch gekennzeichnet,**
**dass** die Hubvorrichtungen (1) paarweise auf gegenüberliegenden Seiten (8, 9) der Ladeplattform (4) angeordnet ist.

3. Fahrzeugtransporter nach Anspruch 1 oder 2,
**dadurch gekennzeichnet,**
**dass** die erste Hubeinrichtung (5) eine Teleskophubeinrichtung (10) mit Hydraulikzylinder (11) ist.

4. Fahrzeugtransporter nach einem der vorangehenden Ansprüche,
**dadurch gekennzeichnet,**
**dass** die zweite Hubeinrichtung (6) durch die erste Hubeinrichtung (5) zwischen einer Ladestellung (12) und einer Anhebestellung (13) vertikal anhebbar und absenkbar ist.

5. Fahrzeugtransporter nach einem der vorangehenden Ansprüche,
**dadurch gekennzeichnet,**
**dass** die erste Hubeinrichtung (5, 10) eine Innenprofil (14) -in-Außenprofil (15) -Führung (16) aufweist.

6. Fahrzeugtransporter nach Anspruch 5,
**dadurch gekennzeichnet,**
**dass** die zweite Hubeinrichtung (6, 7) eine Führung (17) seitlich neben und parallel zur Führung (16) der ersten Hubeinrichtung (5, 10) aufweist.

7. Fahrzeugtransporter nach einem der vorangehenden Ansprüche,
**dadurch gekennzeichnet,**
**dass** zumindest die Führung (16) der ersten Hubeinrichtung (5, 10) im wesentlichen seitlich an der Ladeplattform (4) befestigt ist.

8. Fahrzeugtransporter nach einem der vorangehenden Ansprüche,
**dadurch gekennzeichnet,**
**dass** das Innengehäuse (19) im wesentlichen an einem oberen Ende (20) der ersten Hubeinrichtung(5, 10) lösbar befestigt ist.

9. Fahrzeugtransporter nach einem der vorangehenden Ansprüche,
**dadurch gekennzeichnet,**
**dass** die Spindeltriebhubeinrichtung (7) wenigstens eine Drehspindel (21) mit verdrehgesicherter Spindelmutter (22) aufweist, wobei der Spindelmutter (22) ein mit der Hebebühne (3) verbundener Tragblock (23) zugeordnet ist.

10. Fahrzeugtransporter nach einem der vorangehenden Ansprüche,
**dadurch gekennzeichnet,**
**dass** ein Spindeldrehmotor (24) in der Führung (17) der Spindeltriebhubeinrichtung (7) und insbesondere im Innengehäuse (19) angeordnet ist.

11. Fahrzeugtransporter nach Ansprüche 5-10,
**dadurch gekennzeichnet,**
**dass** die Führungen (16, 17) von erster und zweiter Hubeinrichtung (5, 7; 6, 10) ineinander verschachtelt sind.

12. Fahrzeugtransporter nach Ansprüche 5-11,
**dadurch gekennzeichnet,**
**dass** das Innenprofil (14) der ersten Hubeinrichtung (5) das Innengehäuse (19) der zweiten Hubeinrichtung (6) bildet oder enthält.

13. Fahrzeugtransporter nach Ansprüche 5-12,
**dadurch gekennzeichnet,**
**dass** der Tragblock (23) seitlich aus einem Längsschlitz (25) des Innengehäuses (19) der zweiten Hubeinrichtung (6, 7) vorsteht.

14. Fahrzeugtransporter nach einem der vorangehenden Ansprüche,
**dadurch gekennzeichnet,**
**dass** zumindest der Spindeltriebhubeinrichtung (7) eine insbesondere elektronische Höhenausgleichseinrichtung (26) zugeordnet ist.

15. Fahrzeugtransporter nach Anspruch 14,
**dadurch gekennzeichnet,**
**dass** eine Verstellung der Spindeltriebhubeinrichtung (7) mittels der Höhenausgleichseinrichtung (26) zumindest detektierbar und signalisierbar ist.

16. Fahrzeugtransporter nach Ansprüche 14-15,
**dadurch gekennzeichnet,**
**dass** die Höhenausgleichseinrichtung (26) zumindest Spindeltriebhubeinrichtungen von paarweise angeordneten Hubvorrichtungen (1) zugeordnet ist.

17. Fahrzeugtransporter nach einem der vorangehenden Ansprüche,
**dadurch gekennzeichnet,**
**dass** die erste Hubeinrichtung (5) eine zweite Spindeltriebhubeinrichtung (27) ist.

18. Fahrzeugtransporter nach Anspruch 17,
**dadurch gekennzeichnet,**
**dass** die Spindeltriebhubeinrichtung (7, 27) der ersten und zweiten Hubeinrichtung (5, 6) im wesentlichen gleich aufgebaut sind.

19. Fahrzeugtransporter nach einem der vorangehenden Ansprüche 17-18,
**dadurch gekennzeichnet,**
**dass** ein Tragblock (28) der zweiten Spindeltriebhubeinrichtung (27) mit dem innenprofil (14) der ersten Hubeinrichtung (7) zum Anheben relativ zum Außenprofil (15) verbunden ist.

20. Fahrzeugtransporter nach einem der vorangehenden Ansprüche 17-19,
**dadurch gekennzeichnet,**
**dass** erste und zweite Spindeltriebhubeinrichtungen (7, 27) miteinander verschachtelt sind.

21. Fahrzeugtransporter nach einem der vorangehenden Ansprüche 17-20,
**dadurch gekennzeichnet,**
**dass** Drehspindeln (21, 33) der ersten und zweiten Spindeltriebhubeinrichtung (7, 27) unterschiedliche Gewindesteigungen aufweisen.

22. Fahrzeugtransporter nach einem der vorangehenden Ansprüche 17-21,
**dadurch gekennzeichnet,**
**dass** die Drehspindel (33) der zweiten Spindeltriebhubeinrichtung (27) in der Drehspindel (21) der ersten Spindeltriebhubeinrichtung (7) angeordnet ist.

23. Fahrzeugtransporter nach einem der vorangehenden Ansprüche,
**dadurch gekennzeichnet,**
**dass** die Hubvorrichtung (1) zwischen einer Ladestellung (29) und einer Einsatzstellung (30) verschwenkbar gelagert ist.

24. Fahrzeugtransporter nach einem der vorangehenden Ansprüche,
**dadurch gekennzeichnet,**
**dass** die Hubvorrichtung (1) im wesentlichen in einer Ebene (31) einer Fahrbahnoberfläche (32) der Hebebühne (3) endet.

## Claims

1. Vehicle transporter (2) with a lift device (1) raising and lowering a lifting platform (3) relative to a lower loading platform (4) between a load position and a drive position, **characterised in that** the lift device (1) has first and second, serially coupled lift devices (5, 6) which can extend vertically and in parallel, of which at least the second lift device (6) is a spindle drive lift assembly (7), wherein the second lift device (6, 7) has an inner housing (19) guided in an outer housing (18), in which inner housing the spindle drive lift assembly (7) is arranged.

2. Vehicle transporter according to claim 1, **characterised in that** the lift devices (1) are arranged in pairs on opposing sides (8, 9) of the loading platform (4).

3. Vehicle transporter according to claim 1 or claim 2, **characterised in that** the first lift device (5) is a telescopic lift device (10) with hydraulic cylinders (11).

4. Vehicle transporter according to any of the preceding claims, **characterised in that** the second lift device (6) can be raised and lowered vertically by the first lift device (5) between a loading position (12) and a raising position (13).

5. Vehicle transporter according to any of the preceding claims, **characterised in that** the first lift device (5, 10) has an inner-profile (14) in-outer-profile (15) guide (16).

6. Vehicle transporter according to claim 5, **characterised in that** the second lift device (6, 7) has a guide (17) laterally next to and parallel to the guide (16) of the first lift device (5, 10).

7. Vehicle transporter according to any of the preceding claims, **characterised in that** at least the guide (16) of the first lift device (5, 10) is attached to the loading platform (4) substantially laterally.

8. Vehicle transporter according to any of the preceding claims, **characterised in that** the inner housing (19) is attached releasably, substantially at one upper end (20) of the first lift device (5, 10).

9. Vehicle transporter according to any of the preceding claims, **characterised in that** the spindle drive lift assembly (7) has at least one rotary spindle (21) with a twist-proof spindle nut (22), wherein a carrier block (23) connected with the lifting platform (3) is allocated to the spindle nut (22).

10. Vehicle transporter according to any of the preceding claims, **characterised in that** the spindle motor (24) is arranged in the guide (17) of the spindle drive lift assembly (7) and in particular in the inner housing (19).

11. Vehicle transporter according to claims 5 - 10, **characterised in that** the guides (16, 17) of the first and second lift devices (5, 7; 6, 10) are nested in each other.

12. Vehicle transporter according to claims 5 - 11, **characterised in that** the inner profile (14) of the first lift device (5) forms or contains the inner housing (19) of the second lift device (6).

13. Vehicle transporter according to claims 5 - 12, **characterised in that** the support block (23) protrudes laterally from a linear slot (25) of the inner housing (19) of the second lift device (6, 7).

14. Vehicle transporter according to any of the preceding claims, **characterised in that** an in particular electronic height compensation device (26) is allocated at least to the spindle drive lift assembly (7).

15. Vehicle transporter according to claim 14, **characterised in that** a displacement of the spindle drive lift assembly (7) can be at least detected and signalled by means of the height compensation device (26).

16. Vehicle transporter according to claims 14 - 15, **characterised in that** the height compensation device (26) is allocated at least to spindle drive lift assemblies of lift devices (1) arranged in pairs.

17. Vehicle transporter according to any of the preceding claims, **characterised in that** the first lift device (5) is a second spindle drive lift assembly (27).

18. Vehicle transporter according to claim 17, **characterised in that** the spindle drive lift assemblies (7, 27) of the first and second lift devices (5, 6) are constructed substantially identically.

19. Vehicle transporter according to any of the preceding claims 17 - 18, **characterised in that** a support block (28) of the second spindle drive lift assembly (27) is connected with the inner profile (14) of the first lift device (7) for raising relative to the outer profile (15).

20. Vehicle transporter according to any of the preceding claims 17 - 19, **characterised in that** the first and second spindle drive lift assemblies (7, 27) are nested together.

21. Vehicle transporter according to any of the preceding claims 17 - 20, **characterised in that** rotary spindles (21, 33) of the first and second spindle drive lift devices (7, 27) have different thread pitches.

22. Vehicle transporter according to any of the preceding claims 17 - 21, **characterised in that** the rotary spindle (33) of the second spindle drive lift assembly (27) is arranged in the rotary spindle (21) of the first spindle drive lift assembly (7).

23. Vehicle transporter according to any of the preceding claims, **characterised in that** the lift device (1) is mounted pivotably between a loading position (29) and a usage position (30).

24. Vehicle transporter according to any of the preceding claims, **characterised in that** the lift device (1) substantially ends in a plane (31) of a drive surface (32) of the lifting platform (3).

## Revendications

1. Transporteur de véhicules (2) comportant un dispositif de levage (1) qui lève et abaisse une rampe de levage (3) par rapport à une plate-forme de chargement inférieure (4) entre une position de chargement et une position de transport, **caractérisé en ce que** le dispositif de levage (1) comporte des premier et deuxième dispositifs de levage (5, 6) extensibles parallèles verticaux accouplés en série, parmi lesquels au moins le deuxième dispositif de levage (6) est un dispositif de levage à vis (7), dans lequel le deuxième dispositif de levage (6,7) comporte un boîtier interne (19) mené dans un boîtier externe (18), le dispositif de levage à vis (7) étant agencé dans ledit boîtier interne.

2. Transporteur de véhicules selon la revendication 1,
**caractérisé**
**en ce que** les dispositifs de levage (1) sont agencés par paires sur des côtés opposés (8, 9) de la plate-forme de chargement (4).

3. Transporteur de véhicules selon la revendication 1 ou 2,
**caractérisé**
**en ce que** le premier dispositif de levage (5) est un dispositif de levage télescopique (10) à vérin hydraulique (11).

4. Transporteur de véhicules selon l'une des revendications précédentes,
**caractérisé**
**en ce que** le deuxième dispositif de levage (6) peut être levé et abaissé verticalement par le premier dispositif de levage (5) entre une position de chargement (12) et une position de levage (13).

5. Transporteur de véhicules selon l'une des revendications précédentes,
**caractérisé**
**en ce que** le premier dispositif de levage (5, 10) comporte un guide (16) du profilé interne (14) dans le profilé externe (15).

6. Transporteur de véhicules selon la revendication 5,
**caractérisé**
**en ce que** le deuxième dispositif de levage (6, 7) comporte un guide (17) latéral adjacent et parallèle au guide (16) du premier dispositif de levage (5, 10).

7. Transporteur de véhicules selon l'une des revendications précédentes,
**caractérisé**
**en ce qu'**au moins le guide (16) du premier dispositif de levage (5, 10) est fixé essentiellement latéralement sur la plate-forme de chargement (4).

8. Transporteur de véhicules selon l'une des revendications précédentes,
**caractérisé**
**en ce que** le boîtier interne (19) est essentiellement fixé de manière amovible à une extrémité supérieure (20) du premier dispositif de levage (5, 10).

9. Transporteur de véhicules selon l'une des revendications précédentes,
**caractérisé**
**en ce que** le dispositif de levage à vis (7) comporte au moins une vis rotative (21) avec un écrou de vis bloqué en rotation (22), dans lequel l'écrou de vis (22) est associé au bloc de support (23) connecté à la rampe de levage (3).

10. Transporteur de véhicules selon l'une des revendications précédentes,
**caractérisé**
**en ce qu'**un moteur de rotation de vis (24) est agencé dans le guide (17) du dispositif de levage à vis (7), et en particulier dans le boîtier interne (19).

11. Transporteur de véhicules selon les revendications 5 à 10,
**caractérisé**
**en ce que** les guides (16, 17) des premier et deuxième dispositifs de levage (5, 7 ; 6, 10) sont emboîtés l'un dans l'autre,

12. Transporteur de véhicules selon les revendications 5 à 11,
**caractérisé**
**en ce que** le profilé interne (14) du premier dispositif de levage (5) constitue ou comprend le boîtier interne (19) du deuxième dispositif de levage (6).

13. Transporteur de véhicules selon les revendications 5 à 12,
**caractérisé**
**en ce que** le bloc de support (23) dépasse latéralement d'une ouverture longitudinale (25) du boîtier interne (19) du deuxième dispositif de levage (6, 7).

14. Transporteur de véhicules selon l'une des revendications précédentes,
**caractérisé**
**en ce qu'**au moins le dispositif de levage à vis (7) est associé à un dispositif de nivellement en hauteur (26), en particulier électronique.

15. Transporteur de véhicules selon la revendication 14,
**caractérisé**
**en ce qu'**un ajustement du dispositif de levage à vis (7) à l'aide du dispositif de nivellement en hauteur (26) peut au moins être détecté et signalisé.

16. Transporteur de véhicules selon les revendications 14 à 15,
**caractérisé**
**en ce que** le dispositif de nivellement en hauteur (26) est au moins associé à des dispositifs de levage à vis de dispositifs de levage (1) agencés par paires.

17. Transporteur de véhicules selon l'une des revendications précédentes,
**caractérisé**
**en ce que** le premier dispositif de levage (5) est un deuxième dispositif de levage à vis (27).

18. Transporteur de véhicules selon la revendication 17,
**caractérisé**
**en ce que** les dispositifs de levage à vis (7, 27) des premier et deuxième dispositifs de levage (5, 8) sont essentiellement identiques dans leur construction.

19. Transporteur de véhicules selon l'une des revendications précédentes 17 et 18,
**caractérisé**
**en ce qu'**un bloc de support (28) du deuxième dispositif de levage à vis (27) est relié au profilé interne (14) du premier dispositif de levage (7) pour mettre en oeuvre un levage par rapport au profilé externe (15).

20. Transporteur de véhicules selon l'une des revendications précédentes 17 à 19,
**caractérisé**
**en ce que** les premier et deuxième dispositifs de levage à vis (7, 27) sont emboîtés l'un dans l'autre.

21. Transporteur de véhicules selon l'une dés revendications précédentes 17 à 20,
**caractérisé**
**en ce que** les vis rotatives (21, 33) des premier et deuxième dispositifs de levage à vis (7, 27) présentent des pas de filetage différents.

22. Transporteur de véhicules selon l'une des revendications précédentes 17 à 21,
**caractérisé**
**en ce que** la vis rotative (33) du deuxième dispositif de levage à vis (27) est agencée dans la vis rotative (21) du premier dispositif de levage à vis (7).

23. Transporteur de véhicules selon l'une des revendications précédentes,
**caractérisé**
**en ce que** le dispositif de levage (1) est monté de manière pivotante entre une position de chargement (29) et une position d'utilisation (30).

24. Transporteur de véhicules selon l'une des revendications précédentes,
**caractérisé**
**en ce que** le dispositif de levage (1) se termine essentiellement dans un plan (31) d'une surface de voie de roulement (32) de la rampe de levage (3).
